# EUROPÄISCHE PATENTSCHRIFT

(11) **EP 2 286 964 B1**
(45) Veröffentlichungstag und Bekanntmachung des Hinweises auf die Patenterteilung: **21.10.2015**
(21) Anmeldenummer: 10008668.5
(22) Anmeldetag: 19.08.2010
(51) Int. Cl.: B25J 15/02

(54) **Greifvorrichtung**
Gripping device
Dispositif de préhension

(30) Priorität: 22.08.2009 DE 102009038551
(43) Veröffentlichungstag der Anmeldung: 23.02.2011
(73) Patentinhaber: Gunda Electronic GmbH, 88048 Friedrichshafen (DE)
(72) Erfinder: Dzubiel, Gerhard, 88045 Friedrichshafen (DE)
(74) Vertreter: Daub, Thomas

(56) Entgegenhaltungen:
- EP-A1- 2 045 107
- FR-A1- 2 564 358
- JP-A- 9 109 081
- JP-A- 2005 059 118
- US-A- 4 765 669

## Beschreibung

### Stand der Technik

Die Erfindung geht aus von Greifvorrichtung nach dem Oberbegriff des Anspruchs 1. Eine solche Greifvorrichtung ist aus dem Dokument FR 2 564 358 A1 bekannt.

Aus der DE 100 48 662 A1 ist bereits eine Greifvorrichtung bekannt, die eine Antriebseinheit zur Bereitstellung einer Drehbewegung, ein Greifelement, das in einer Öffnungs- und/oder Schließbewegung bewegbar ist, und einen Umsetzmechanismus, der zur Umsetzung der Drehbewegung der Antriebseinheit in die Öffnungs- und/oder Schließbewegung des Greifelements zumindest ein Kurvenbahnelement aufweist, umfasst.

### Vorteile der Erfindung

Die Erfindung geht aus von einer Greifvorrichtung mit einer Antriebseinheit zur Bereitstellung einer Drehbewegung, mit zumindest einem Greifelement, das in einer Öffnungs- und/oder Schließbewegung bewegbar ist, und mit einem Umsetzmechanismus, der zur Umsetzung der Drehbewegung der Antriebseinheit in die Öffnungs- und/oder Schließbewegung des wenigstens einen Greifelements zumindest ein Kurvenbahnelement aufweist,
wobei das wenigstens eine Kurvenbahnelement zumindest eine durchgreifende Kurvenbahn aufweist, und der Umsetzmechanismus zumindest ein oberes und ein unterer Führungselement aufweist, die beidseits des Kurvenbahnelements angeordnet sind.
Erfindungsgemäß weist zumindest eines der Führungselemente zumindest eine durchgreifende Führungsbahn auf.
Mit der durchgreifenden Kurvenbahn kann eine Kopplung zwischen einem Bahneingriffselement und der Kurvenbahn vorteilhaft ausgestaltet werden. Insbesondere kann dadurch eine Führung der Kurveneingriffselemente verbessert werden, wodurch eine Betriebssicherheit der Greifvorrichtung verbessert werden kann. Unter einer "durchgreifenden Kurvenbahn" soll dabei insbesondere eine Kurvenbahn verstanden werden, die das Kurvenbahnelement in zumindest einer Querschnittsebene vollständig durchsetzt.

Mit den zwei Führungselementen kann eine besonders vorteilhafte und sichere Führung der Bahneingriffselemente realisiert werden.

Mit der durchgreifenden Führungsbahn kann eine besonders stabile Führung realisiert werden. Vorteilhafterweise greift das wenigstens eine Bahneingriffselement durch die zumindest eine Führungsbahn hindurch.

Besonders vorteilhaft ist es, wenn die wenigstens eine durchgreifende Kurvenbahn spiralförmig ausgebildet ist. Dadurch kann eine besonders vorteilhafte Bewegung der Greifelemente realisiert werden. Vorzugsweise ist die Kurvenbahn in Form einer archimedischen Spirale ausgebildet, d.h. ein Windungsabstand der Spirale ist konstant.

Besonders vorteilhafte ist es, wenn der Umsetzmechanismus wenigstens ein Bahneingriffselement aufweist, das durch die wenigstens eine Führungsbahn und die wenigstens eine Kurvenbahn hindurchgreift. Dadurch kann eine Führung der Bahneingriffselemente weiter verbessert werden. Unter "Hindurchgreifen des Bahneingriffselements durch die Kurvenbahn" soll in diesem Zusammenhang insbesondere verstanden werden, dass das Bahneingriffselement entlang einer Durchgriffsrichtung die Kurvenbahn vollständig durchsetzt. Vorteilhafterweise durchsetzt das Bahneingriffselement das Kurvenbahnelement vollständig. Besonders vorteilhaft weist es beidseitig über das Kurvenbahnelement einen Überstand auf.

Ferner ist es vorteilhaft, wenn das Kurvenbahnelement und die beiden Führungselemente scheibenförmig ausgebildet sind und das Kurvenbahnelement entlang einer Rotationsachse der Antriebseinheit zwischen den beiden Führungselementen angeordnet sind.

In einer vorteilhaften Ausgestaltung weisen die Führungselemente jeweils eine durchgreifende Führungsbahn auf und greift das Bahneingriffselement in die Führungsbahn des oberen Führungselements und die Führungsbahn des unteren Führungselement ein.

In einer besonders vorteilhaften Ausgestaltung ist die zumindest eine durchgreifende Führungsbahn linear ausgebildet. Dadurch kann eine einfache Führung der Greifelemente realisiert werden.

Ferner wird vorgeschlagen, dass zumindest eines der Führungselemente eine Ausnehmung aufweist, die zur Aufnahme des Kurvenbahnelements vorgesehen ist. Dadurch kann eine einfache und sichere Führung des Kurvenbahnelements erreicht werden.

In einer besonders vorteilhaften Ausgestaltung der Erfindung weist die Antriebseinheit einen Elektromotor auf. Dadurch kann eine einfache und kostengünstige Antriebseinheit realisiert werden. Vorzugsweise ist der Elektromotor als ein Schrittmotor ausgebildet. Grundsätzlich kann die Antriebseinheit alternativ und/oder zusätzlich auch andere Motoren aufweisen, wie insbesondere einen Druckluftmotor.

Zudem ist es vorteilhaft, wenn die Greifvorrichtung eine Sensoreinheit umfasst, die dazu vorgesehen ist, zumindest eine Kenngröße der Antriebseinheit bereitzustellen. Dadurch kann eine Verstellung der Greifelemente mittels der Antriebseinheit einfach überwacht werden.

Vorteilhafterweise weist die Sensoreinheit zumindest ein Sensormittel auf, dass dazu vorgesehen ist, eine Drehbewegung der Antriebseinheit zu bestimmen. Dadurch kann eine Abweichung der Drehbewegung von einem vorgegebenen Wert einfach bestimmt werden, wodurch die Greifvorrichtung vorteilhaft dazu vorgesehen werden kann, Gegenstände mit einer unbekannten Größe zu greifen. Vorteilhafterweise ist die Kenngröße als eine Winkel- und/oder Wegkenngröße ausgebildet, die zur Überwachung der Drehbewegung der Antriebseinheit vorgesehen ist.

Ferner ist es vorteilhaft, wenn die Sensoreinheit zumindest ein Sensormittel aufweist, das dazu vorgesehen ist, eine Stromaufnahme der Antriebseinheit zu bestimmen. Dadurch kann eine Haltekraft des Elektromotors besonders vorteilhaft eingeregelt werden. Insbesondere bei Verwendung eines Schrittmotors ist es vorteilhaft, die als eine Stromkenngröße ausgebildete Kenngröße zur Bestimmung einer Stromaufnahme der Antriebseinheit vorzusehen, da insbesondere bei einem Schrittmotor eine Kraft proportional zur Stromaufnahme ist.

Außerdem wird vorgeschlagen, dass die Greifvorrichtung eine Steuer- und/oder Regeleinheit umfasst, die dazu vorgesehen ist, die Antriebseinheit in Abhängigkeit von der zumindest einen Kenngröße zu steuern. Dadurch kann die Öffnungs- und/oder Schließbewegung vorteilhaft überwacht werden, wodurch eine besonders vorteilhafte Steuerung bzw. Regelung der Greifvorrichtung ermöglicht werden kann.

Besonders vorteilhaft ist dabei die Steuer- und/oder Regeleinheit dazu vorgesehen, das zumindest eine Greifelement in Abhängigkeit von der zumindest einen Kenngröße zu schließen und/oder zu öffnen. Dadurch können insbesondere Gegenstände mit einer unbekannten Größe vorteilhaft gegriffen werden. Zum Greifen von Gegenständen mit einer unbekannten Größe ist es dabei insbesondere vorteilhaft, wenn die Steuer- und/oder Regeleinheit das zumindest eine Greifelement in Abhängigkeit von der Kenngröße schließt, die die Drehbewegung der Antriebseinheit beschreit, da mittels dieser Kenngröße vorteilhaft das Greifen von einem Gegenstand erkannt werden kann.

Zudem kann ein Greifvorgang vorteilhaft beschleunigt werden, wenn die Steuer- und/oder Regeleinheit dazu vorgesehen ist, die Greifelemente in Abhängigkeit von der zumindest einen Kenngröße vorzupositionieren.

### Zeichnung

Weitere Vorteile ergeben sich aus der folgenden Zeichnungsbeschreibung. In der Zeichnung ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematisierte Darstellung einer erfindungsgemäßen Greifvorrichtung,
- Fig. 2: einen Umsetzmechanismus der Greifvorrichtung,
- Fig. 3: den Umsetzmechanismus in einer Explosionsdarstellung,
- Fig. 4: eine Aufsicht auf den Umsetzmechanismus,
- Fig. 5: eine Darstellung von einer Kurvenbahn des Umsetzmechanismus,
- Fig. 6: eine Darstellung von eines weiteren Kurvenbahnelements des Umsetzmechanismus und
- Fig. 7: ein drittes Kurvenbahnelement des Umsetzmechanismus.

### Beschreibung der Ausführungsbeispiele

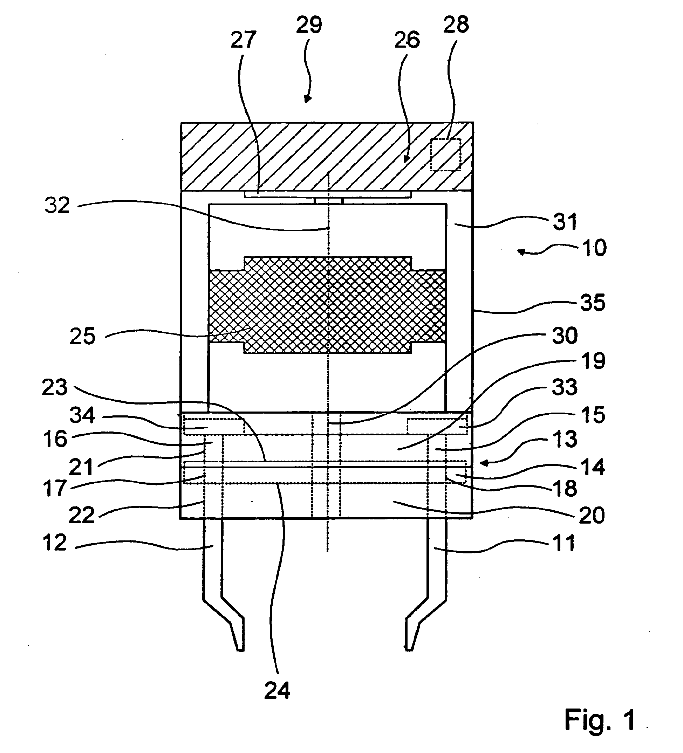

Die Figuren 1 bis 7 zeigen eine Greifvorrichtung zum Greifen von Bauteilen. Die Greifvorrichtung ist als eine elektrische Greifvorrichtung ausgebildet. Mittels der Greifvorrichtung sind beliebige Gegenstände greifbar. Dazu ist es beispielsweise denkbar, die Greifvorrichtung verfahrbar anzuordnen und Gegenstände, die mittels einer nicht näher dargestellten Kameravorrichtung erfasst wurden oder deren Position anderweitig relativ zu der Greifvorrichtung ausgerichtet wurde, zu greifen.

Die Greifvorrichtung umfasst eine Antriebseinheit 10, die eine Drehbewegung bereitstellt. Weiter umfasst die Greifvorrichtung zwei Greifelemente 11, 12, mittels denen die aufzunehmenden Gegenstände gegriffen werden können. Die Greifelemente 11, 12 sind in einer linearen Öffnungs- und Schließbewegung bewegbar. Zur Umsetzung der Drehbewegung weist die Greifvorrichtung einen Umsetzmechanismus 13 auf, der die Drehbewegung der Antriebseinheit 10 in die lineare Öffnungs- und Schließbewegung der Greifelemente 11, 12 umsetzt.

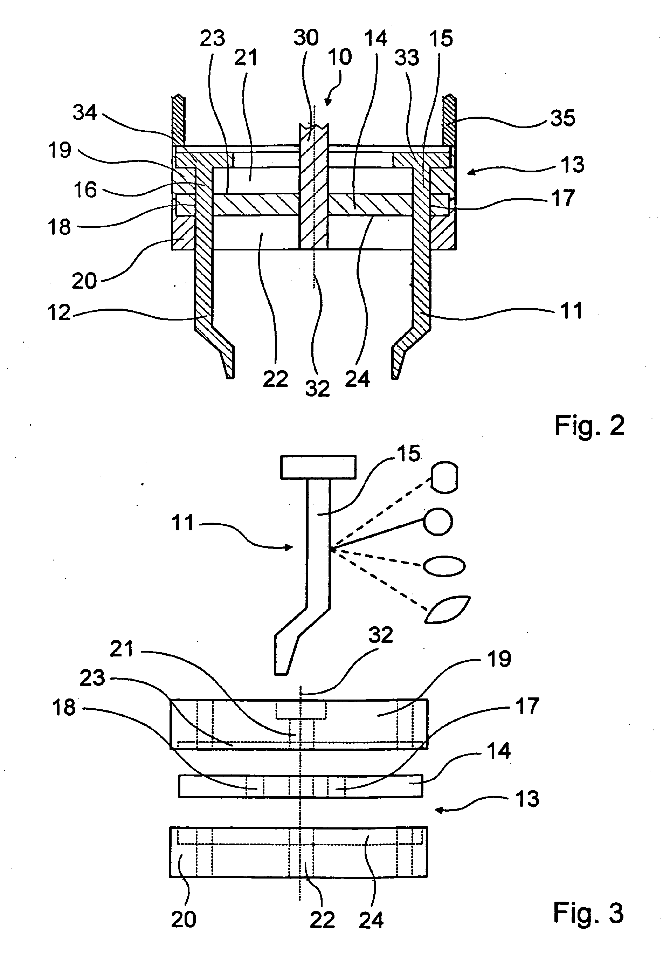

Der Umsetzmechanismus 13 umfasst ein Kurvenbahnelement 14 mit zwei durchgreifenden Kurvenbahnen 17, 18 (vgl. Figur 2). Weiter umfasst der Umsetzmechanismus 13 zwei Bahneingriffselemente 15, 16, die durch die Kurvenbahnen 17, 18 hindurch greifen. Die Bahneingriffselemente 15, 16 sind jeweils fest mit einem der Greifelemente 11, 12 verbunden. Eine Anzahl der Kurvenbahnen 17, 18, der Bahneingriffselemente 15, 16 und der Greifelemente 11, 12 ist jeweils gleich. Jedem der Greifelemente 11, 12 ist eines der Bahneingriffselemente 15, 16 und eine der Kurvenbahnen 17, 18 zugeordnet.

Weiter umfasst der Umsetzmechanismus 13 zwei Führungselemente 19, 20, die beidseits des Kurvenbahnelements 14 angeordnet sind. Die Führungselemente 19, 20 weisen jeweils eine durchgreifende Führungsbahn 21, 22 auf. Das obere Führungselement 19 ist räumlich zwischen der Antriebseinheit 10 und dem Kurvenbahnelement 14 angeordnet. Das untere Führungselement ist räumlich zwischen dem Kurvenbahnelement 14 und den Greifelementen 11, 12 angeordnet (vgl. Figur 3).

Das Kurvenbahnelement 14 und die beiden Führungselemente 19, 20 sind scheibenförmig ausgebildet. Das Kurvenbahnelement 14 ist drehfest mit einer Antriebsachse 30 der Antriebseinheit 10 verbunden. Die beiden Führungselemente 19, 20 sind fest mit einem Stator 31 der Antriebseinheit verbunden. Die Führungselemente 19, 20 bilden einen Teil eines Außengehäuses 35 der Greifvorrichtung aus. Die beiden Führungselemente 19, 20 sind fest miteinander verbunden. Das Kurvenbahnelement 14 ist entlang einer Rotationsachse 32 der Antriebseinheit 10 zwischen den beiden Führungselementen 19, 20 angeordnet. Die Antriebseinheit 10 und der Umsetzmechanismus 13, der die Führungselemente 19, 20 und das Kurvenbahnelement 14 umfasst, bilden jeweils ein Modul aus. Die Greifvorrichtung ist modular zusammengesetzt.

Die Führungselemente 19, 20 weisen zur Aufnahme des Kurvenbahnelements 14 jeweils eine Ausnehmung 23, 24 auf, die in montiertem Zustand einander zugewandt sind. Die Ausnehmung 23 des oberen Führungselements 19 ist in eine Unterseite des Führungselements 19 eingebracht. Die Ausnehmung 24 des unteren Führungselements 20 ist in eine Oberseite des Führungselements 20 eingebracht. In montiertem Zustand bilden die beiden Ausnehmungen 23, 24 einen Hohlraum aus, in dem das Kurvenbahnelement 14 angeordnet ist. Ein Bauraum, in dem das Kurvenbahnelement 14 angeordnet ist, ist somit durch die beiden Führungselemente 19, 20 aufgespannt. Die beiden Führungselemente 19, 20 umschließen das Kurvenbahnelement 14 vollständig.

Die beiden Führungselemente 19, 20 sind im Wesentlichen analog ausgebildet. Die Führungsbahnen 21, 22, die in die Führungselemente 19, 20 eingebracht sind, sind linear ausgebildet. Ein Wirkquerschnitt der Führungsbahnen 21, 22 entspricht einem Wirkquerschnitt der Bahneingriffselemente 15, 16. Die beiden Führungselemente 19, 20 sind deckungsgleich angeordnet. In einer Projektionsebene senkrecht zu der Rotationsachse 32 der Antriebseinheit 10 liegen die Führungsbahnen 21, 22 der Führungselemente 19, 20 jeweils übereinander.

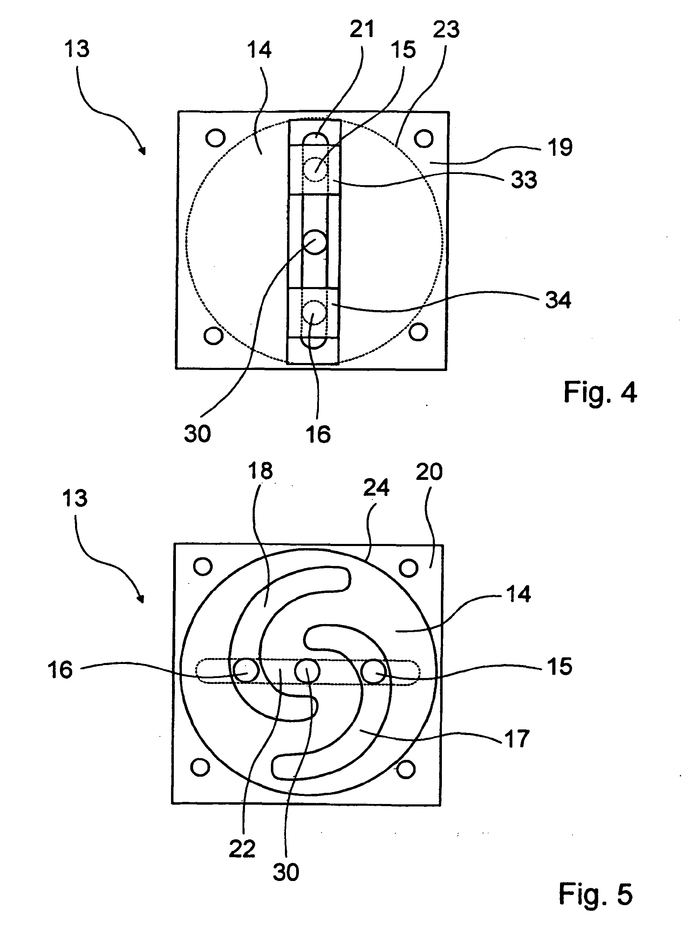

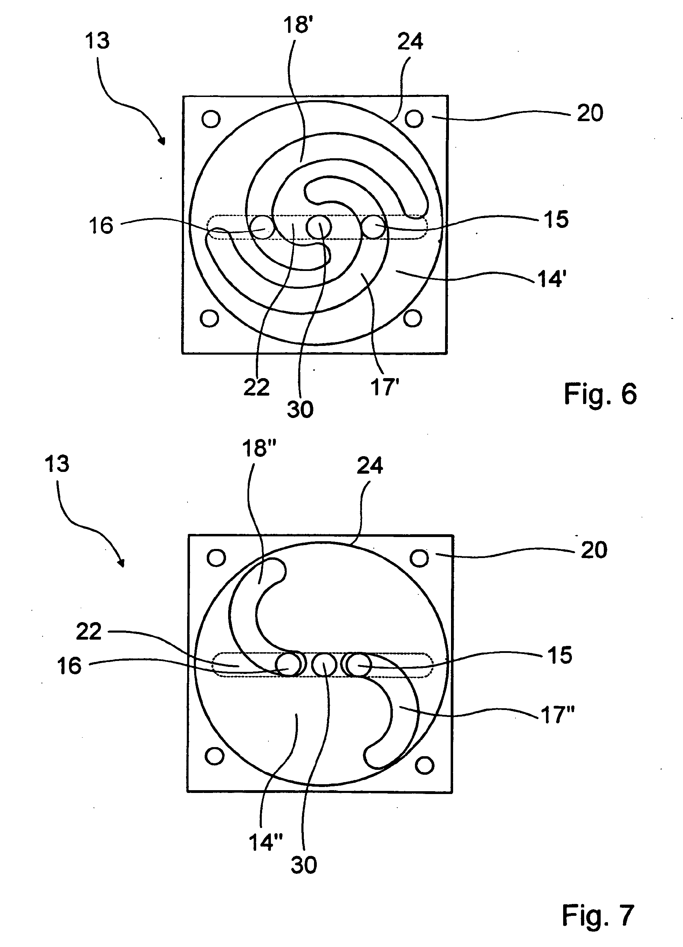

Die Kurvenbahnen 17, 18 des Kurvenbahnelements sind spiralförmig ausgebildet (vgl. Figur 5). Weist das Kurvenbahnelement eine Drehbewegung auf, werden die beiden Bahneingriffselemente 15, 16 entlang der Führungsbahnen 21, 22 linear in Abhängigkeit einer Drehrichtung nach außen oder nach innen geführt. Die Kurvenbahnen 17, 18 entsprechen dabei einer archimedischen Spirale. Eine konstante Drehgeschwindigkeit des Kurvenbahnelements 14 wird in eine konstante lineare Bewegung umgesetzt. Das Kurvenbahnelement 14 kann grundsätzlich auch gegen andere Kurvenbahnelemente, wie beispielsweise ein Kurvenbahnelement 14' mit anderen spiralförmigen Kurvenbahnen 17', 18' (vgl. Figur 6) oder ein Kurvenbahnelement 14" mit kreisbogenförmigen Kurvenbahnen 17", 18" (vgl. Figur 7), ausgetauscht werden.

Die Bahneingriffselemente 15, 16 greifen jeweils in die Führungsbahn 21 des Führungselements 19 und die Führungsbahn 22 des Führungselements 20 ein. Grundsätzlich ist es aber auch denkbar, die beiden Führungsbahnen 21, 22 zu teilen und für die Bahneingriffselemente 15, 16 jeweils eine eigene Führungsbahn vorzusehen.

Um die Bahneingriffselemente 15, 16 gegen eine Verdrehung zu sichern, ist ein Wirkquerschnitt der Bahneingriffselemente 15, 16 in einem Teilbereich asymmetrisch ausgebildet. Zur Umsetzung der Drehbewegung in die Öffnungs- und Schließbewegung weisen die Bahneingriffselemente 15, 16 in einem Teilbereich, der für einen Eingriff in die Kurvenbahnen 17, 18 vorgesehen ist, einen runden Wirkquerschnitt auf. Zusätzlich weisen die Bahneingriffselemente 15, 16 jeweils einen rechteckigen Führungskopf 33, 34 auf, der für einen Eingriff in einen Teil der Führungsbahn 21 des oberen Führungselements 19 vorgesehen ist. Ein Teil der Bahneingriffselemente 15, 16, der in die untere Führungsbahn 22 eingreift, weist ebenfalls einen runden Wirkungsquerschnitt auf.

Das untere Führungselement 20 führt die Bahneingriffselemente 15, 16 und damit die Greifelemente 11, 12 lediglich entlang der Öffnungs- und Schließbewegung. Die Führungsbahn 22 des unteren Führungselements 20 weist lediglich einen Wirkungsquerschnitt auf. Die Bahneingriffselemente 15, 16 greifen durch das untere Führungselement 20 hindurch.

Das obere Führungselement 19 führt die Bahneingriffselemente 15, 16 und damit die Greifelemente 11, 12 ebenfalls entlang der Öffnungs- und Schließbewegung. Zudem sichert das obere Führungselement 19 die Greifelemente 11, 12 gegen ein Verdrehen. Die Führungsbahn 21 des oberen Führungselements 19 weist in einem einer Oberseite zugewandten Teilbereich einen vergrößerten Wirkquerschnitt auf. Der vergrößerte Wirkquerschnitt entspricht dem Wirkdurchmesser der Führungsköpfe 33, 34 der Bahneingriffselemente 15, 16. Da der Wirkquerschnitt der Führungsköpfe 33, 34 eckig ist, verhindert die Führungsbahn 21 des oberen Führungselements 19 ein Verdrehen der Bahneingriffselemente 15, 16 in der Führungsbahn 22 und damit ein Verdrehen der Greifelemente 11, 12 (vgl. Figur 4). Zur Montage werden die Bahneingriffselemente 15, 16 von der Oberseite her durch das obere Führungselement 19 hindurch gesteckt. Anschließend werden die Bahneingriffselement 15, 16 durch das Kurvenbahnelement 14 und das untere Führungselement 20 hindurchgeführt. In montiertem Zustand sichern die Führungsköpfe 33, 34 der Bahneingriffselemente 15, 16 die Greifelemente 11, 12 gegen ein Verdrehen. Zudem definieren die Führungsköpfe 33, 34 der Bahneingriffselemente 15, 16 eine axiale Position der Greifelemente 11, 12, indem sie ein Verschieben entlang der Rotationsachse 32 verhindern.

Alternativ oder zusätzlich ist es auch denkbar, die Bahneingriffselemente 15, 16 in dem Teilbereich, der für den Eingriff in die Kurvenbahnen 17, 18 vorgesehen ist, mit einem asymmetrischen Wirkungsquerschnitt zu versehen. Beispielsweise ist es denkbar, den Wirkungsquerschnitt seitlich abgeflacht auszuführen, wodurch die Bahneingriffselemente 15, 16 beim Eingriff in die Führungsbahnen 21, 22 die Greifelemente gegen ein Verdrehen sichern können. Weitere Wirkungsquerschnitte, wie beispielsweise ein ovaler Wirkungsquerschnitt, sind ebenfalls denkbar (vgl. Figur 3).

Die Antriebseinheit umfasst einen Elektromotor 25. Der Elektromotor 25 ist als ein Schrittmotor ausgebildet. Mittels des Elektromotors 25 ist die Drehbewegung des Kurvenbahnelements 14 in diskreten, definierten Winkelschritten einstellbar. Die Drehbewegung des Elektromotors 25 wird dann mittels des Umsetzmechanismus 13 in die lineare Öffnungs- und Schließbewegung der Greifelemente 11, 12 umgesetzt.

Weiter umfasst die Greifvorrichtung eine Sensoreinheit 26, die verschiedene Kenngrößen der Antriebseinheit 10 bereitstellt. Die Sensoreinheit umfasst zwei Sensormittel 27, 28. Das erste Sensormittel 27 ist als ein Bewegungsencoder ausgebildet, mittels dem die Drehbewegung der Antriebseinheit 10 sensiert wird. Die dazu korrespondierende, von der Sensoreinheit 26 bereitgestellte Kenngröße ist als eine Winkelkenngröße ausgebildet, mittels der die Drehbewegung der Antriebseinheit 10 überwacht wird. Das zweite Sensormittel 28 bestimmt eine Stromaufnahme der Antriebseinheit 10. Die dazu korrespondierende, von der Sensoreinheit 26 bereitgestellte Kenngröße ist als eine Stromkenngröße ausgebildet, die einen von der Antriebseinheit 10 aufgenommenen elektrischen Strom beschreibt.

Zur Steuerung der Antriebseinheit 10 umfasst die Greifvorrichtung eine Steuer- und Regeleinheit 29, die eine Strom- und Spannungsversorgung des Elektromotors 25 steuert. Die Steuer- und Regeleinheit 29 bildet ein weiteres Modul der Greifvorrichtung. Die Steuer- und Regeleinheit 29 ist modular an die Antriebseinheit 10 angebunden.

Die Steuer- und Regeleinheit 29 steuert die Antriebseinheit 10 in Abhängigkeit von den von der Sensoreinheit 26 bereitgestellten Kenngrößen. Die Steuer- und Regeleinheit 29 regelt die Stromstärke des Elektromotors 25 in Abhängigkeit von der Stromkenngröße. Mittels der Kenngröße, die die Drehbewegung der Antriebseinheit 10 beschreibt, steuert die Steuer- und Regeleinheit 29 die Öffnungs- und Schließbewegung der Greifelemente 11, 12.

Die Steuer- und Regeleinheit 29 überwacht mittels der Kenngröße, die die Drehbewegung der Antriebseinheit 10 beschreibt, die Drehbewegung des Elektromotors 25, die grundsätzlich durch eine Ansteuerung des als Schrittmotor ausgebildeten Elektromotors 25 definiert vorgegeben ist. Mittels der Kenngröße erkennt die Steuer- und Regeleinheit 29 eine Abweichung zwischen der Ansteuerung der Antriebseinheit 10 und der resultierenden Drehbewegung.

In einem Betriebsmodus, der zum Greifen von Gegenständen mit einer unbekannten Größe vorgesehen ist, schließt die Steuer- und Regeleinheit 29 die Greifelemente 11, 12 in Abhängigkeit von der Kenngröße, die die Drehbewegung der Antriebseinheit 10 beschreibt. Zum Greifen solcher Gegenstände öffnet die Steuer- und Regeleinheit 29 zunächst die Greifelemente 11, 12 ausreichend weit. Ist eine Maximalgröße der zu greifenden Gegenstände bekannt, positioniert die Steuer- und Antriebseinheit 29 die Greifelemente 11, 12 vor. Ansonsten stellt die Steuer- und Regeleinheit 29 eine maximale Öffnungsweite der Greifelemente 11, 12 ein.

Anschließend schließt die Steuer- und Regeleinheit 29 die Greifelemente 11, 12. Dazu stellt die Steuer- und Regeleinheit 29 eine definierte Stromstärke für die Antriebseinheit 10 ein. Die Stromstärke definiert dabei eine Kraft, mittels der die Greifelemente 11, 12 geschlossen werden. Sobald die Greifelemente 11, 12 an dem zu greifenden Gegenstand anliegen, verlangsamt sich die Drehbewegung der Antriebseinheit 10. Die Steuer- und Regeleinheit 29, die diese Änderung der Drehbewegung durch die korrespondierende Kenngröße erkennt, stellt dann die Stromstärke auf einen definierten Haltewert ein. Über den Haltewert für die Stromstärke ist eine Haltekraft für die zu greifenden Gegenstände definiert.

In einem Betriebsmodus, der zum Greifen von Gegenständen mit einer bekannten Größe vorgesehen ist, positioniert die Steuer- und Regeleinheit 29 die Greifelemente 11, 12 zunächst auf eine Öffnungsweite vor, die geringfügig größer ist als die Größe des zu greifenden Gegenstands, und schließt anschließend die Greifelemente 11, 12.

In einem Betriebsmodus, der zum Vorpositionieren der Greifelemente 11, 12 auf eine definierte Position vorgesehen ist, schließt oder öffnet die Steuer- und Regeleinheit 29 die Greifelemente 11, 12. Die Steuer- und Regeleinheit überwacht dabei die Öffnungsbewegung mittels der Kenngröße, die die Drehbewegung der Antriebseinheit 10 beschreibt. Die Steuer- und Regeleinheit 29 bestromt die Antriebseinheit 10, bis die Greifelemente 11, 12 auf die definierte Position eingestellt sind. Die von der Antriebseinheit 10 dabei ausgewertete Kenngröße gibt lediglich ein Inkrement der Drehbewegung wieder. Ein Absolutwert der Drehbewegung, der die Position der Greifelemente 11, 12 beschreibt, wird von der Steuer- und Regeleinheit 29 in Abhängigkeit von den durchlaufenen Inkrementen berechnet. Grundsätzlich ist es aber auch denkbar, dass die Kenngröße direkt die Position der Greifelemente 11, 12 beschreibt.

In der Steuer- und Regeleinheit 29 sind verschiedene Stromwerte hinterlegt, die den unterschiedlichen Betriebsmodi zugeordnet sind. In dem Betriebsmodus, der zum Vorpositionieren vorgesehen ist, stellt die Steuer- und Regeleinheit 29 eine große Stromstärke ein, wodurch die Greifelemente 11, 12 für die Vorpositionierung schnell geöffnet bzw. geschlossen werden. In dem Betriebsmodus, der zum Greifen der Gegenstände vorgesehen ist, stellt die Steuer- und Regeleinheit 29 einen Stromwert ein, der kleiner ist, wodurch die Greifelemente 11, 12 langsamer geschlossen werden. Zudem begrenzt die Steuer- und Regeleinheit 29 damit eine Maximalkraft, die beim Schließen der Greifelemente 11, 12 auf die zu greifenden Gegenstände wirkt. In dem Betriebsmodus, der zum Halten der gegriffenen Gegenstände vorgesehen ist, stellt die Steuer- und Regeleinheit 29 eine dritte Stromstärke ein, die die Haltekraft definiert. Grundsätzlich kann der Stromwert, der zum Halten vorgesehen ist, gleich sein wie der Stromwert, der zum Greifen vorgesehen ist.

Prinzipiell kann anstelle des Schrittmotors auch ein Druckluftmotor verwendet werden. Bei einem Druckluftmotor kann die Steuer- und Regeleinheit 29 in Analogie zur Stromstärke einen Druck einstellen, mit dem der Druckluftmotor beaufschlagt wird. Ein Verhalten des Druckluftmotors in Abhängigkeit von dem Druck entspricht in etwa dem des Schrittmotors in Abhängigkeit der Stromstärke.

Die dargestellte Greifvorrichtung umfasst zwei Greifelemente. In Abhängigkeit von einer Größe der Greifvorrichtung ist es auch möglich, die Greifvorrichtung mit mehr als zwei Greifelementen zu versehen. Um beispielsweise eine Ausgestaltung mit drei Greifelementen zu realisieren, werden in das Kurvenbahnelement drei Kurvenbahnen eingebracht, die jeweils einem der Greifelemente zugeordnet sind. Die Führungselemente weisen dann analog ebenfalls drei Führungsbahnen auf, die in Bezug auf die Rotationsachse der Antriebseinheit sternförmig angeordnet sind. Analog sind auch Ausgestaltungen mit vier oder fünf Greifelementen denkbar.

**Bezugszeichen**

| | | | |
|---|---|---|---|
| 10 | Antriebseinheit | 28 | Sensormittel |
| 11 | Greifelement | 29 | Steuer- und/oder Regeleinheit |
| 12 | Greifelement | | |
| 13 | Umsetzmechanismus | 30 | Antriebsachse |
| 14 | Kurvenbahnelement | 31 | Stator |
| 15 | Bahneingriffselement | 32 | Rotationsachse |
| 16 | Bahneingriffselement | 33 | Führungskopf |
| 17 | Kurvenbahn | 34 | Führungskopf |
| 18 | Kurvenbahn | 35 | Außengehäuse |
| 19 | Führungselement | | |
| 20 | Führungselement | | |
| 21 | Führungsbahn | | |
| 22 | Führungsbahn | | |
| 23 | Ausnehmung | | |
| 24 | Ausnehmung | | |
| 25 | Elektromotor | | |
| 26 | Sensoreinheit | | |
| 27 | Sensormittel | | |

## Patentansprüche

1. Greifvorrichtung mit einer Antriebseinheit (10) zur Bereitstellung einer Drehbewegung, mit zumindest einem Greifelement (11, 12), das in einer Öffnungs- und/oder Schließbewegung bewegbar ist, und mit einem Umsetzmechanismus (13), der zur Umsetzung der Drehbewegung der Antriebseinheit (10) in die Öffnungs- und/oder Schließbewegung des wenigstens einen Greifelements (11, 12) zumindest ein Kurvenbahnelement (14) aufweist, wobei das wenigstens eine Kurvenbahnelement (14) zumindest eine durchgreifende Kurvenbahn (17, 18) aufweist und der Umsetzmechanismus (13) ein oberes und ein unteres Führungselement (19, 20) aufweist, die beidseits des Kurvenbahnelements (14) angeordnet sind,
**dadurch gekennzeichnet, dass**
zumindest eines der Führungselemente (19, 20) zumindest eine durchgreifende Führungsbahn (21, 22) aufweist.

2. Greifvorrichtung nach Anspruch 1,
**dadurch gekennzeichnet, dass**
die wenigstens eine durchgreifende Kurvenbahn (17, 18) spiralförmig ausgebildet ist.

3. Greifvorrichtung nach Anspruch 1 oder 2,
**dadurch gekennzeichnet, dass**
der Umsetzmechanismus (13) wenigstens ein Bahneingriffselement (15, 16) aufweist, das durch die zumindest eine Führungsbahń (21, 22) und die wenigstens eine Kurvenbahn (17, 18) hindurchgreift, wobei das Kurvenbahnelement (14) und die beiden Führungselemente (19, 20) scheibenförmig ausgebildet sind und das Kurvenbahnelement (14) entlang einer Rotationsachse (32) der Antriebseinheit (10) zwischen den beiden Führungselementen (19, 20) angeordnet ist.

4. Greifvorrichtung nach Anspruch 3,
**dadurch gekennzeichnet, dass**
die Führungselemente (19, 20) jeweils eine durchgreifende Führungsbahn (21, 22) aufweisen und das Bahneingriffselement (15, 16) in die Führungsbahn (21) des oberen Führungselements (19) und die Führungsbahn (22) des unteren Führungselements (20) eingreift.

5. Greifvorrichtung nach einem der vorhergehenden Ansprüche,
**dadurch gekennzeichnet, dass**
die zumindest eine durchgreifende Führungsbahn (21, 22) linear ausgebildet ist.

6. Greifvorrichtung nach einem der vorhergehenden Ansprüche,
**dadurch gekennzeichnet, dass**
zumindest eines der Führungselemente (19, 20) eine Ausnehmung (23, 24) aufweist, die zur Aufnahme des Kurvenbahnelements (14) vorgesehen ist.

7. Greifvorrichtung nach einem der vorhergehenden Ansprüche,
**dadurch gekennzeichnet, dass**
die Antriebseinheit (10) einen Elektromotor (25) aufweist.

8. Greifvorrichtung nach einem der vorhergehenden Ansprüche,
**gekennzeichnet durch**
eine Sensoreinheit (26), die dazu vorgesehen ist, zumindest eine Kenngröße der Antriebseinheit (10) bereitzustellen.

9. Greifvorrichtung nach Anspruch 8,
**dadurch gekennzeichnet, dass**
die Sensoreinheit (26) zumindest ein Sensormittel (27) aufweist, dass dazu vorgesehen ist, eine Drehbewegung der Antriebseinheit (10) zu bestimmen.

10. Greifvorrichtung nach Anspruch 8 oder 9,
**dadurch gekennzeichnet, dass**
die Sensoreinheit (26) zumindest ein Sensormittel (28) aufweist, das dazu vorgesehen ist, eine Stromaufnahme der Antriebseinheit (10) zu bestimmen.

11. Greifvorrichtung zumindest nach Anspruch 8,
**gekennzeichnet durch**
eine Steuer- und/oder Regeleinheit (29), die dazu vorgesehen ist, die Antriebseinheit (10) in Abhängigkeit von der zumindest einen Kenngröße zu steuern.

12. Greifvorrichtung nach Anspruch 11,
**dadurch gekennzeichnet, dass**
die Steuer- und/oder Regeleinheit (29) dazu vorgesehen ist, das zumindest eine Greifelement (11, 12) in Abhängigkeit von der zumindest einen Kenngröße zu schließen und/oder zu öffnen.

13. Greifvorrichtung nach Anspruch 11 oder 12,
**dadurch gekennzeichnet, dass**
die Steuer- und/oder Regeleinheit (29) dazu vorgesehen ist, die Greifelemente (11, 12) in Abhängigkeit von der zumindest einen Kenngröße vorzupositionieren.

## Claims

1. Gripping device with a drive unit (10) for providing a rotary movement, with at least one gripping element (11, 12) that is movable in an opening and/or closing movement, and with a converting mechanism (13) which, for converting the rotary movement of the drive unit (10) into the opening and/or closing movement of the at least one gripping element (11, 12), comprises at least one curved-track element (14), the at least one curved-track element (14) comprising at least one pass-through curved track (17, 18) and the converting mechanism (13) comprising an upper and a lower guiding element (19, 20), which are arranged on both sides of the curved-track element (14),
**characterised in that**
at least one of the guiding element (19, 20) comprises at least one pass-through guiding track (21, 22).

2. Gripping device according to claim 1,
**characterized in that**
the at least one pass-through curved track (17, 18) is embodied spiral-shaped.

3. Gripping device according to claim 1 or 2,
**characterized in that**
the converting mechanism (13) comprises at least one track-engaging element (15, 16), which engages through the at least one guiding track (21, 22) and the at least one curved track (17, 18), the curved-track element (14) and the two guiding elements (19, 20) being embodied disc-shaped and the curved-track element (14) being arranged along a rotary axis (32) of the drive unit (10) between the two guiding elements (19, 20).

4. Gripping device according to claim 3,
**characterized in that**
the guiding elements (19, 20) each comprise a pass-through guiding track (21, 22) and the track-engaging element (15, 16) engages into the guiding track (21) of the upper guiding element (19) and into the guiding track (22) of the lower guiding element (20).

5. Gripping device according to one of the preceding claims,
**characterized in that**
the at least one pass-through guiding track (21, 22) is embodied linear.

6. Gripping device according to one of the preceding claims,
**characterized in that**
at least one of the guiding elements (19, 20) comprises a recess (23, 24) that is provided for receiving the curved-track element (14).

7. Gripping device according to one of the preceding claims,
**characterized in that**
the drive unit (10) comprises an electromotor (25).

8. Gripping device according to one of the preceding claims,
**characterized by**
a sensor unit (26), which is provided for supplying at least one parameter of the drive unit (10).

9. Gripping device according to claim 8,
**characterized in that**
the sensor unit (26) comprises at least one sensor means (27), which is provided for determining a rotary movement of the drive unit (9).

10. Gripping device according to claim 8 or 9,
**characterized in that**
the sensor unit (26) comprises at least one sensor means (28), which is provided for determining a current intake of the drive unit (10).

11. Gripping device at least according to claim 8,
**characterized by**
a control and/or regulation unit (29), which is provided for controlling the drive unit (10) in dependence on the at least one parameter.

12. Gripping device according to claim 11,
**characterized in that**
the control and/or regulation unit (29) is provided for closing and/or opening the at least one gripping element (11, 12) in dependence on the at least one parameter.

13. Gripping device according to claim 11 or 12,
**characterized in that**
the control and/or regulation unit (29) is provided for pre-positioning the gripping elements (11, 12) in dependence on the at least one parameter.

## Revendications

1. Dispositif de préhension avec une unité de propulsion (10) pour fournir un mouvement rotatif, avec au moins un élément de préhension (11, 12) lequel est mobil dans un mouvement d'ouverture et/ou de fermeture, et avec un mécanisme de conversion (13) comprenant au moins un élément de chemin incurvé (14) pour la conversion du mouvement rotatif de l'unité de propulsion (10) dans le mouvement d'ouverture et/ou de fermeture de l'au moins un élément de préhension (11, 12), l'au moins un élément de chemin incurvé (14) comprenant au moins un chemin incurvé (17, 18) passant à travers, et le mécanisme de conversion (13) comprenant un élément de guidage supérieur et un élément de guidage inférieur (19, 20), lesquels sont disposés sur les deux côtés de l'élément de chemin incurvé (14),
**caractérisé en ce qu'**
au moins un des éléments de guidage (19, 20) comprend au moins un chemin de guidage (21, 22) passant à travers.

2. Dispositif de préhension selon la revendication 1,
**caractérisé en ce que**
l'au moins un chemin incurvé (17, 18) passant à travers est implémenté en forme de spirale.

3. Dispositif de préhension selon la revendication 1 ou 2,
**caractérisé en ce que**
le mécanisme de conversion (13) comprend au moins un élément d'enclenchement-chemin (15, 16), lequel passe à travers de l'au moins un chemin de guidage (21, 22) et à travers de l'au moins un chemin incurvé (17, 18), l'élément de chemin incurvé (14) et les deux éléments de guidage (19, 20) étant implémentés en forme de disc et l'élément de chemin incurvé (14) étant disposé le long d'un axe rotatif (32) de l'unité de propulsion (10) entre les deux éléments de guidage (19, 20).

4. Dispositif de préhension selon la revendication 3,
**caractérisé en ce que**
les éléments de guidage (19, 20) comprennent respectivement un chemin de guidage (21, 22) passant à travers, et que l'élément d'enclenchement-chemin (15, 16) s'enclenche dans le chemin de guidage (21) de l'élément de guidage (19) supérieur et dans le chemin de guidage (22) de l'élément de guidage (20) inférieur.

5. Dispositif de préhension selon l'une quelconque des revendications précédentes,
**caractérisé en ce que**
l'au moins un chemin de guidage (21, 22) passant à travers est implémenté linéaire.

6. Dispositif de préhension selon l'une quelconque des revendications précédentes,
**caractérisé en ce qu'**
au moins un des éléments de guidage (19, 20) comprend une échancrure (23, 24), laquelle est prévue à recevoir l'élément de chemin incurvé (14).

7. Dispositif de préhension selon l'une quelconque des revendications précédentes,
**caractérisé en ce que**
l'unité de propulsion (10) comprend un moteur électrique (25).

8. Dispositif de préhension selon l'une quelconque des revendications précédentes,
**caractérisé par**
une unité de capteur (26), laquelle est prévue à fournir au moins un paramètre de l'unité de propulsion (10).

9. Dispositif de préhension selon la revendication 8,
**caractérisé en ce que**
l'unité de capteur (26) comprend au moins un moyen de capteur (27), lequel est prévu à déterminer un mouvement rotatif de l'unité de propulsion (10).

10. Dispositif de préhension selon l'une quelconque des revendications 8 ou 9,
**caractérisé en ce que**
l'unité de capteur (26) comprend au moins un moyen de capteur (28), lequel est prévu à déterminer une absorption de courant électrique de l'unité de propulsion (10).

11. Dispositif de préhension au moins selon la revendication 8,
**caractérisé par**
une unité de contrôle et/ou régulation (29), laquelle est prévue à contrôler l'unité de propulsion (10) en dépendance à l'au moins un paramètre.

12. Dispositif de préhension selon la revendication 11,
**caractérisé en ce que**
l'unité de contrôle et/ou régulation (29) est prévue à fermer et/ou ouvrir l'au moins un élément de préhension (11, 12) en dépendance à l'au moins un paramètre.

13. Dispositif de préhension selon l'une quelconque des revendications 11 ou 12,
**caractérisé en ce que**
l'unité de contrôle et/ou régulation (29) est prévue à pré-positionner les éléments de préhension (11, 12) en dépendance à l'au moins un paramètre.
